# EUROPÄISCHE PATENTSCHRIFT

(11) **EP 0 526 719 B1**
(45) Veröffentlichungstag und Bekanntmachung des Hinweises auf die Patenterteilung: **22.02.1995**
(21) Anmeldenummer: 92110371.9
(22) Anmeldetag: 19.06.1992
(51) Int. Cl.: B64D 11/06

(54) **Vorrichtung zur Ausbildung von Kindersitzen**
Arrangement to improve child's seat
Dispositif de perfectionnement de siège pour enfant

(30) Priorität: 06.08.1991 DE 4125959
(43) Veröffentlichungstag der Anmeldung: 10.02.1993
(73) Patentinhaber: Daimler-Benz Aerospace Airbus Gesellschaft mit beschränkter Haftung, 21129 Hamburg (DE)
(72) Erfinder: Müller, Hans-Jürgen, W-2359 Henstedt-Ulzburg (DE); Sprenger, Wilfried, W-2165 Issendorf (DE)
(74) Vertreter: Hansmann, Dierk, Dipl.-Ing.

(56) Entgegenhaltungen:
- DE-U- 8 913 568
- US-A- 1 664 958
- US-A- 4 460 215

## Beschreibung

Die Erfindung betrifft eine Anordnung von Kindersitzen in Flugzeugkabinen, im Bereich von Passagiersitzen, die als sogenannte Erwachsenensitze ausegebildet sind.

Die bekannten Vorrichtungen zur Bereitstellung von Sitzplätzen sind nicht in ausreichendem Maße dafür geeignet, sowohl für erwachsene Passagiere als auch für Kleinkinder geeignete Sitzplätze bereitzustellen und derart anzuordnen, daß sowohl eine ausreichende technische Funktionalität als auch eine Möglichkeit zur Betreuung und Beaufsichtigung der Kleinkinder bereitgestellt wird.

Aufgabe der vorliegenden Erfindung ist es daher, eine Vorrichtung der einleitend genannten Art zu verbessern, um die Funktionalität und die Benutzungsfreundlichkeit zu erhöhen.

Diese Aufgabe wird erfindungsgemäß dadurch gelöst, daß der Kindersitz und der Erwachsenensitz im wesentlichen einander gegenüberliegend angeordnet sind, der Kindersitz mit einem Adapter im Bereich einer Flugzeugquerwandung befestigt und oberhalb einer von einer Sitzfläche des Erwachsenensitzes liegenden Ebene montiert ist sowie zwischen dem Kindersitz und dem Erwachsenensitz ein Abstand kleiner als eine mittlere Länge eines menschlichen Armes vorgesehen ist.

Durch diese Anordnung des Kindersitzes in einem relativ zu dem Erwachsenensitz gegenüberliegenden Bereich ist es möglich, daß der Erwachsene ein im Bereich des Kindersitzes befindliches Kleinkind beobachten und sich ihm zuwenden kann. Das Kind hat darüber hinaus ständigen Blickkontakt mit dem Erwachsenen und fühlt sich dadurch in der ihm ungewohnten Umgebung nicht verlassen. Hierdurch ist es möglich, den Reisekomfort der mit Kindern reisenden Personen zu erhöhen und eine Belästigung von Mitreisenden durch akustische Unmutäußerungen des Kindes zu vermeiden. Durch die Befestigung des Kindersitzes mit Hilfe eines Adapters im Bereich einer Wandung ist es möglich, unterschiedliche Typen von Kindersitzen, insbesondere für unterschiedliche Altersklassen vorgesehene Kindersitze, im Bereich der Vorrichtung anzuordnen. Durch die Montage des Adapters in einem oberhalb einer von der Sitzfläche des Erwachsenensitzes liegenden Ebene wird der Blickkontakt zwischen dem Erwachsenen und dem Kind verbessert und unterhalb des Kindersitzes ein Stauraum geschaffen, der beispielsweise als Fußraum verwendet werden kann. Die Bemaßung des Abstandes zwischen dem Kindersitz und dem Erwachsenensitz ermöglicht es jederzeit, daß der Erwachsene in einen körperlichen Kontakt mit dem Kind tritt, ohne sich von seinem Sitz zu erheben. Dies kann insbesondere bei Start- und Landephasen von entscheidender Bedeutung sein, in denen eine Vielzahl von ungewohnten Eindrücken auf das Kind einströmen und dieses einer besonderen Fürsorge bedarf.

Zur Ermöglichung einer preiswerten Fertigung sowie zur Durchführung einer Anpassung an unterschiedliche Einsatzanforderungen wird vorgeschlagen, daß der Adapter aus einer sich im wesentlichen in einer horizontalen Richtung erstreckenden Auflage und einer senkrecht zur Auflage angeordneten Rückenverkleidung ausgebildet und eine Aufnahme von standardisierten Kindersitzen aufweist.

Eine leichte Auswechselbarkeit des Kindersitzes kann dadurch ermöglicht worden, daß zur Befestigung des Kindersitzes im Bereich des Adapters mindestens ein in den Kindersitz eingreifender Gurt vorgesehen ist, der im Bereich des Adapters fixiert ist.

Eine ausreichend sichere Fixierung des Adapters im Bereich der Wandung erfolgt dadurch, daß der Adapter von mindestens zwei Halterungen im Bereich der Wandung lösbar fixiert ist.

Zur Gewährleistung einer schnellen und damit preiswerten Montage wird vorgeschlagen, daß der Adapter in einer seitlichen Richtung in die Halterungen einschiebbar ausgebildet ist.

Eine einfach zu handhabende und dennoch robuste Ausführungsform wird dadurch bereitgestellt, daß die Halterung eine Bohrung aufweist, die sich im wesentlichen in einer horizontalen Richtung erstreckt und einen Riegel aufnimmt, der einen im wesentlichen durch eine Traverse und ein Basiselement festgelegten Abstand zum Adapter aufweist.

Zur Durchführung einer Kombination einer einfachen Montagemöglichkeit und einer sichere Fixierung in einem montierten Zustand wird vorgeschlagen, daß die Halterung aus ein U-Profil ausbildende Platten sowie einem Quersteg gebildet und zwischen den Platten ein Halterungssteg geführt ist und daß sich durch die Platten und den Halterungssteg hindurch mindestens ein Sicherungszapfen erstreckt.

Eine einfache Fixierung des Adapters im Bereich der Halterungen sowie eine komfortable Möglichkeit zur Lösung der Verbindung wird dadurch erreicht, daß der Sicherungszapfen mit einem ihn in einem montierten Zustand gegen ein Verrutschen sichernden federnden Element versehen ist.

Die Bedienfreundlichkeit kann weiter dadurch erhöht werden, daß zur Verbesserung einer Positionierbarkeit des Sicherungszapfens ein Bedienring im Bereich eines Endes des Sicherungszapfens angeordnet ist.

Eine Erhöhung der Betriebssicherheit wird dadurch erreicht, daß einer der Erwachsenensitze einen Sicherheitsgurt aufweist, der als ein Drei-Punkt-Gurt ausgebildet ist. Durch diesen Drei-Punkt-Sicherheitsgurt wird insbesondere vermieden, daß bei plötzlichen Brems- oder Beschleunigungsbewegungen des Flugzeuges der Kopf oder der Oberkörper des Erwachsenen auf den Kindersitz oder den Adapter aufschlägt.

Der Benutzungskomfort kann weiterhin dadurch erhöht werden, daß der Kindersitz in einem in lotrechter Richtung unteren Bereich seiner Ausdehnung mit einem Tischelement versehen ist, das verschieblich im Bereich der Auflage geführt ist. Dieser Tisch kann beispielsweise zur Ablage von Lektüre, Nahrungsmitteln oder Kinderspielzeug verwendet werden. In einem unbenutzten Zustand kann der Tisch in den Adapter hineingeschoben werden und hierdurch eine ausreichend große Bewegungsmöglichkeit geschaffen werden.

In der Zeichnung ist ein Ausführungsbeispiel der Erfindung schematisch dargestellt. Es zeigen:

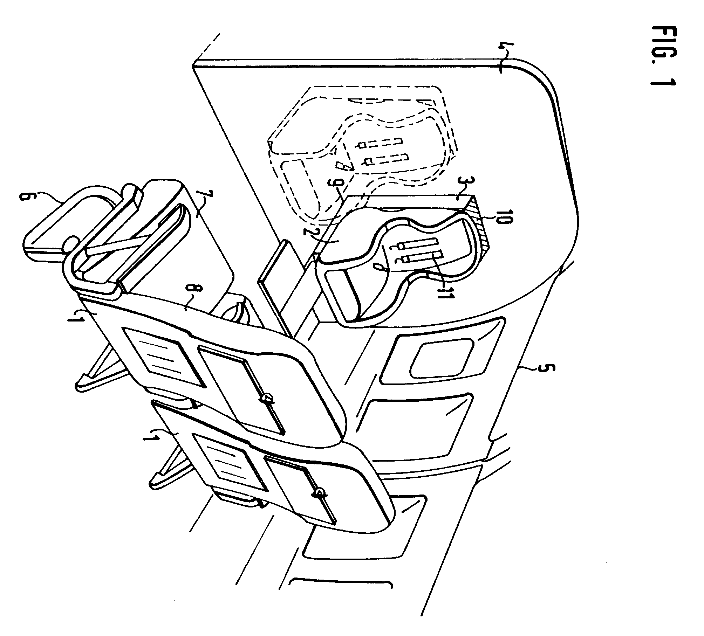

- Fig. 1: eine perspektivische Darstellung einer im Bereich einer Flugzeugkabine angeordneten Vorrichtung,
- Fig. 2: eine Seitenansicht der Vorrichtung, die von einem Erwachsenen und von einem Kind benutzt wird,
- Fig. 3: eine Seitenansicht eines im Bereich einer Wandung angeordneten Adapters mit herausgenommem Kindersitz,
- Fig. 4: eine teilweise Darstellung einer Draufsicht auf den im Bereich der Wandung angeordneten Adapter **und**
- Fig. 5: eine teilweise Darstellung eines Querschnittes gemäß Schnittlinie V-V in Figur 4.

Die dargestellte Vorrichtung besteht aus Erwachsenensitzen (1) sowie Kindersitzen (2). Jeder der Kindersitze (2) ist im Bereich eines Adapters (3) angeordnet, der im Bereich einer Flugzeugwandung (4) montiert ist. Die Flugzeugwandung (4) bildet einen Teil einer Flugzeugkabine (5). Insbesondere ist es möglich, als Wandung (4) eine Trennwand, eine Begrenzung eines Stauschrankes oder eine Küchen- oder Toilettenwand zu verwenden.

Jeder der Erwachsenensitze (1) besteht aus einem Gestell (6), einer Sitzfläche (7) und einer Rückenlehne (8). Der Adapter (3) ist in einem Bereich der Wandung (4) angeordnet, der sich im wesentlichen oberhalb einer von den Sitzflächen (7) aufgespannten Ebene erstreckt.

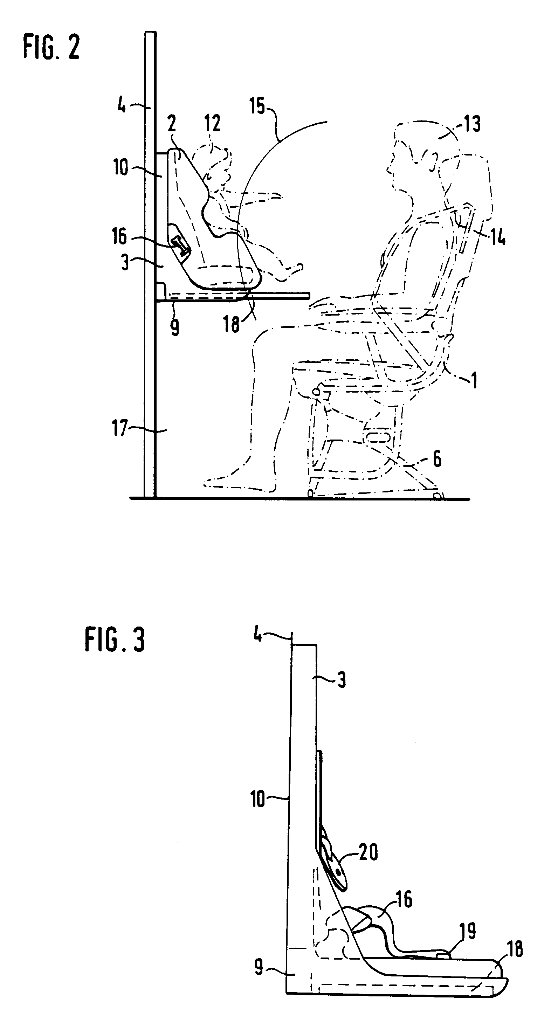

Der Adapter (3) besteht aus einer Auflage (9) sowie einer Rückenverkleidung (10). Die Auflage (9) weist eine im wesentlichen horizontale Ausrichtung auf und die Rückenverkleidung (10) erstreckt sich senkrecht zur Auflage (9). Hierdurch weist der Adapter (3) eine winklige Gestaltung auf, die zur Aufnahme des Kindersitzes (2) geeignet ist. Zur Sicherung eines Benutzers weist der Kindersitz (2) Sicherheitsgurte (11) auf. Bei der Darstellung gemäß Figur 2 ist im Bereich des Kindersitzes (2) ein Kind (12) sowie im Bereich des Erwachsenensitzes (1) ein Erwachsener (13) angeordnet. Der Erwachsene (13) ist von einem Sicherheitsgurt (14) gehaltert, der vorzugsweise als ein Drei-Punkt-Gurt ausgebildet ist. Der Kindersitz (2) weist relativ zum Erwachsenensitz (1) eine Entfernung auf, die geringer als eine mittlere Armlänge eines menschlichen Armes ist. Hierdurch ist gewährleistet, daß der Kindersitz (2) im Bereich eines Greifradius (15) des Erwachsenen (13) liegt. Die Verbindung des Kindersitzes (2) mit dem Adapter (3) kann über einen Gurt (16) erfolgen, der beispielsweise entsprechend von PKW-Sicherheitsgurten in den Kindersitz (2) eingreift. Bei einer derartigen Ausführungsform ist es insbesondere möglich, standardisierte Kindersitze zu verwenden, die vergleichsweise preiswert und in einer Vielzahl von Ausführungsformen angeboten werden.

Unterhalb des Adapters (3) ist ein Fußraum (17) angeordnet, der vom Erwachsenen (13) zur Aufnahme seiner Beine genutzt werben kann. Darüber hinaus ist in einem unteren Bereich des Adapters (3) ein Tischelement (18) angeordnet, das verschieblich im Bereich des Adapters (3) gelagert und hierdurch aus diesem bei einer vorgesehenen Benutzung herausziehbar und in einem Ruhezustand in diesen hineinschiebbar ist.

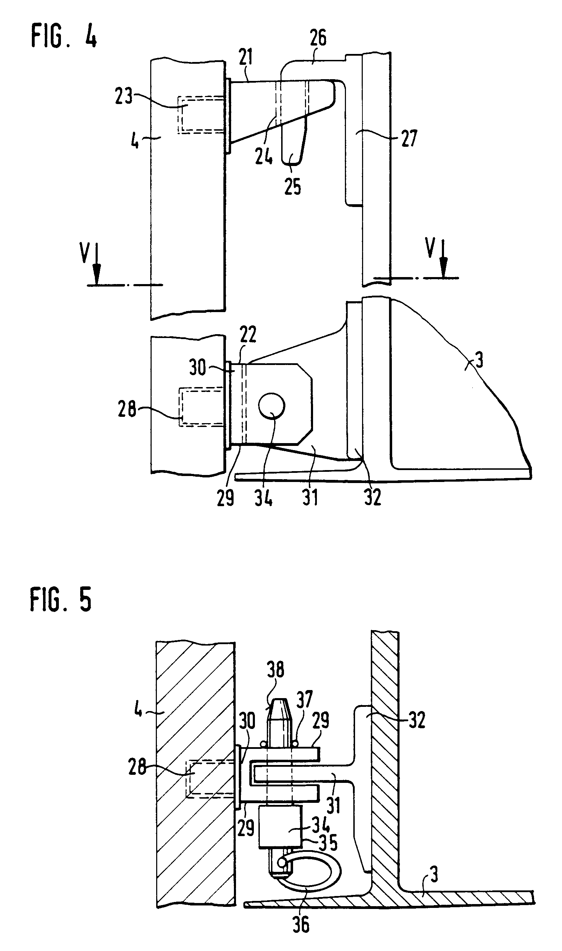

Eine vergrößerte Darstellung eines im Bereich der Wandung (4) angeordneten Adapters (3) zeigt Figur 3. Der Kindersitz (2) ist hierbei aus dem Bereich des Adapters (3) entfernt, so daß der Gurt (16) sichtbar ist. Mit einem Endstück (19) kann der Gurt (16) auf ein Aufnahmelement (20) aufgeschoben werden. Gemäß der Darstellung in Figur 4 sind im Bereich der Wandung (4) Halterungen (21,22) zur Fixierung des Adapters (3) angeordnet. Die Halterung (21) greift mit einem Zapfen (23) in die Wandung (4) ein und weist im Bereich ihrer außerhalb der Wandung (4) angeordneten Ausdehnung eine Bohrung (24) auf, die sich im wesentlichen in einer horizontalen Richtung erstreckt und einen Riegel (25) aufnimmt, der über eine Traverse (26) mit einem Basiselement (27) verbunden ist, das den Adapter (3) haltert. Die Halterung(22) ist über einen Zapfen (28) im Bereich der Wandung (4) fixiert und besteht im wesentlichen aus zwei sich in horizontaler Richtung erstreckenden Platten (29), die von einem Quersteg (30) verbunden sind und gemeinsam mit diesem ein u-förmiges Profil ausbilden. Zwischen den Platten (29) ist ein Halterungssteg (31) geführt, der mit einem Basiselement (32) verbunden ist, das gleichfalls wie das Basiselement (27) den Adapter (3) haltert. Durch die Platten (29) und den Halterungssteg (31) erstreckt sich entsprechend der Darstellung in Figur 5 eine Bohrung, in der der Sicherungszapfen (34) geführt ist. Der Sicherungszapfen (34) weist einen Anschlag (35) sowie einen seine Betätigung erleichternden Bedienring (36) auf. Zu einer Fixierung des Sicherungszapfens (34) im Bereich der Bohrung ist der Sicherungszapfen (34) mit einem federnden Element (37) versehen, das bei einer Einführung des Sicherungszapfens (34) in die Bohrung in den Sicherungszapfen (34) hineingedrückt wird und nach einem Verlassen der Bohrung erneut aus dem Sicherungszapfen (34) herausgedrückt wird und ein Herausrutschen des Sicherungszapfens (34) aus der Bohrung vermeidet. Zur Erleichterung eines Einführens des Sicherungszapfens (34) ist dieser im Bereich seines einen Endes mit einer Anschrägung (38) versehen. Die Bohrung weist zur Erleichterung einer Einführung des federnden Elementes (37) eine Anschrägung auf.

## Patentansprüche

1. Anordnung von Kindersitzen in Flugzeugkabinen, im Bereich von Passagiersitzen, die als sogenannte Erwachsenensitze ausgebildet sind, dadurch gekennzeichnet, daß der Kindersitz (2) und der Erwachsenensitz (1) im wesentlichen einander gegenüberliegend angeordnet sind, der Kindersitz (2) mit einem Adapter (3) im Bereich einer Flugzeugquerwandung (4) befestigt und oberhalb einer von einer Sitzfläche (7) des Erwachsenensitzes (1) liegenden Ebene montiert ist sowie zwischen dem Kindersitz (2) und dem Erwachsenensitz (1) ein Abstand kleiner als eine mittlere Länge eines menschlichen Armes vorgesehen ist.

2. Anordnung nach Anspruch 1, dadurch gekennzeichnet, daß der Adapter (3) aus einer sich im wesentlichen in einer horizontalen Richtung erstreckenden Auflage (9) und einer senkrecht zur Auflage (9) angeordneten Rückenverkleidung (10) ausgebildet und eine Aufnahme von standardisierten Kindersitzen (2) aufweist.

3. Anordnung nach Anspruch 1 oder 2, dadurch gekennzeichnet, daß zur Befestigung des Kindersitzes (2) im Bereich des Adapters (3) mindestens ein in den Kindersitz (2) eingreifender Gurt (16) vorgesehen ist, der im Bereich des Adapters (3) fixiert ist.

4. Anordnung nach einem der Ansprüche 1 bis 3, dadurch gekennzeichnet, daß der Adapter (3) von mindestens zwei Halterungen (21,22) im Bereich der Wandung (4) lösbar fixiert ist.

5. Anordnung nach Anspruch 4, dadurch gekennzeichnet, daß der Adapter (3) in einer seitlichen Richtung in die Halterungen (21,22) einschiebbar ausgebildet ist.

6. Anordnung nach Anspruch 4 oder 5, dadurch gekennzeichnet, daß die Halterung (21) eine Bohrung (24) aufweist, die sich im wesentlichen in einer horizontalen Richtung erstreckt und einen Riegel (25) aufnimmt, der einen im wesentlichen durch eine Traverse (26) und ein Basiselement (27) festgelegten Abstand zum Adapter (3) aufweist.

7. Anordnung nach einem der Ansprüche 4 bis 6, dadurch gekennzeichnet, daß die Halterung (22) ein U-Profil ausbildende Platten (29) sowie einem Quersteg (30) konstruiert gebildet und zwischen den Platten (29) ein Halterungssteg (31) geführt ist und daß sich durch die Platten (29) und den Halterungssteg (31) hindurch mindestens ein Sicherungszapfen (34) erstreckt.

8. Anordnung nach Anspruch 7, dadurch gekennzeichnet, daß der Sicherungszapfen (34) mit einem ihn in einem montierten Zustand gegen ein Verrutschen sichernden federnden Element (37) versehen ist.

9. Anordnung nach Anspruch 7 oder 8, dadurch gekennzeichnet, daß zur Verbesserung einer Positionierbarkeit des Sicherungszapfens (34) ein Bedienring (36) im Bereich eines Endes des Sicherungszapfens (34) angeordnet ist.

10. Anordnung nach einem der Ansprüche 1 bis 9, dadurch gekennzeichnet, daß einer der Erwachsenensitze (1) einen Sicherheitsgurt (14) aufweist, der als ein Drei-Punkt-Gurt ausgebildet ist.

11. Anordnung nach einem der Ansprüche 1 bis 10, dadurch gekennzeichnet, daß der Kindersitz (2) in einem in lotrechter Richtung unteren Bereich seiner Ausdehnung mit einem Tischelement (18) versehen ist, das verschieblich im Bereich der Auflage (10) geführt ist.

## Claims

1. Arrangement of children's seats in aircraft cabins, in the region of passenger seats which are designed as so-called adult seats, characterized in that the child's seat (2) and the adult seat (1) are disposed substantially opposite one another, the child's seat (2) is fastened by an adapter (3) in the region of an aircraft transverse wall (4) and mounted above a plane defined by a seat surface (7) of the adult seat (1) and a clearance shorter than the average length of a human arm is provided between the child's seat (2) and the adult seat (1).

2. Arrangement according to claim 1, characterized in that the adapter (3) takes the form of a support (9) extending substantially in a horizontal direction and a rear moulding (10) disposed at right angles to the support (9) and has a receiver for standard children's seats (2).

3. Arrangement according to claim 1 or 2, characterized in that, for fastening the child's seat (2), there is provided in the region of the adapter (3) at least one belt (16) which engages into the child's seat (2) and is fixed in the region of the adapter (3).

4. Arrangement according to one of claims 1 to 3, characterized in that the adapter (3) is detachably fixed by at least two holding devices (21, 22) in the region of the wall (4).

5. Arrangement according to claim 4, characterized in that the adapter (3) is designed so as to be insertable in a lateral direction into the holding devices (21, 22).

6. Arrangement according to claim 4 or 5, characterized in that the holding device (21) has a bore (24), which extends substantially in a horizontal direction and receives a bolt (25), which has a clearance from the adapter (3) substantially defined by a traverse (26) and a base element (27).

7. Arrangement according to one of claims 4 to 6, characterized in that the holding device (22) is formed by plates (29) and a transverse web (30) forming a U-profile and a holding web (31) is guided between the plates (29) and that at least one retaining pin (34) extends through the plates (29) and the holding web (31).

8. Arrangement according to claim 7, characterized in that the retaining pin (34) is provided with a sprung element (37) which, in the assembled state of the retaining pin, prevents the latter from slipping.

9. Arrangement according to claim 7 or 8, characterized in that, to improve positionability of the retaining pin (34), a control ring (36) is disposed in the region of one end of the retaining pin (34).

10. Arrangement according to one of claims 1 to 9, characterized in that one of the adult seats (1) has a seat belt (14) in the form of a three-point belt.

11. Arrangement according to one of claims 1 to 10, characterized in that the child's seat (2) is provided in an, in a vertical direction, lower region of its extension with a table element (18), which is guided displaceably in the region of the support (10).

## Revendications

1. Aménagement dans une cabine d'avion, de sièges pour enfant dans une zone de sièges destinés à des adultes,
caractérisé en ce que le siège pour enfant (2) et le siège pour adulte (1) sont placés sensiblement face à face, le siège pour enfant (2) étant fixé par un adaptateur (3) à une cloison transversale (4) de l'avion, au-dessus d'un plan passant par l'assise (7) du siège pour adulte (1), la distance séparant le siège pour enfant (2) et le siège pour adulte (1) étant prévue inférieure à la moitié de la longueur moyenne d'un bras humain.

2. Aménagement selon la revendication 1, caractérisé en ce que l'adaptateur (3) est constitué par une surface d'assise (9) sensiblement horizontale associée à un dossier (10) qui lui est perpendiculaire cet ensemble étant équipé de moyens lui permettant d'accueillir des sièges standard (2), pour enfant.

3. Aménagement selon la revendication 1 ou 2, caractérisé en ce que pour fixer le siège pour enfant (2) dans l'adaptateur (3) il est prévu, au niveau de l'adaptateur et fixé à celui-ci, une ceinture (16) venant en prise avec le siège pour enfant (2).

4. Aménagement selon une des revendications 1 à 3, caractérisé en ce que l'adaptateur (3) est fixé de manière amovible au moins à deux supports (21, 22) montés sur la paroi (4).

5. Aménagement selon la revendication 4, caractérisé en ce que l'adaptateur (3) est conçu pour pouvoir être engagé latéralement dans les supports (21, 22).

6. Aménagement selon la revendication 4 ou 5, caractérisé en ce que le support (21) présente un alésage (24) sensiblement horizontal qui reçoit une tige de verrouillage (25) montée à une distance fixe de l'adaptateur (3) par l'intermédiaire d'une traverse (26) et d'une embase (27).

7. Aménagement selon une des revendications 4 à 6, caractérisé en ce que le support (22) est constitué de plaques (29) reliées par une barre transversale (30) de manière à former un U entre les branches (29) duquel est engagée une patte de fixation (31), une broche de sécurité (34) traversant à la fois les plaques (29) et la patte (31).

8. Aménagement selon la revendication 7, caractérisé en ce que la broche de sécurité (34) est équipée, en position montée, d'un élément élastique (37) empêchant sa déviation.

9. Aménagement selon la revendication 7 ou 8, caractérisé en ce que pour faciliter sa mise en place, la broche de sécurité (34) est munie à une extrémité d'un panneau (36) de manipulation.

10. Aménagement selon une des revendications 1 à 9, caractérisé en ce qu'un des sièges pour adulte (1) est équipé d'une ceinture de sécurité, du type à trois points.

11. Aménagement selon une des revendications 1 à 10, caractérisé en ce que le siège pour enfant dispose à sa partie inférieure en direction verticale d'une extension constituée par une table (18) coulissant dans la zone de l'assise (10).
